# EUROPÄISCHE PATENTSCHRIFT

(11) **EP 1 457 606 B1**
(45) Veröffentlichungstag und Bekanntmachung des Hinweises auf die Patenterteilung: **05.09.2007**
(21) Anmeldenummer: 04003991.9
(22) Anmeldetag: 23.02.2004
(51) Int. Cl.: E03B 9/08, F16K 27/00

(54) **Hydrant, insbesondere Unterflurhydrant mit Multifunktionsbuchse**
Hydrant, in particular underground hydrant with multifunctional connection
Bouche d'incendie, en particulier bouche d'incendie souterraine avec boîte de connection multifonctionnelle

(30) Priorität: 03.03.2003 DE 10309471
(43) Veröffentlichungstag der Anmeldung: 15.09.2004
(73) Patentinhaber: VAG-Armaturen GmbH, 68305 Mannheim (DE)
(72) Erfinder: Schmidt, Manfred, 69493 Hirschberg (DE); Böttge, Lothar, 63571 Gelnhausen / OT Hailer (DE)
(74) Vertreter: Rapp, Bertram

(56) Entgegenhaltungen:
- DE-A- 2 621 163
- DE-A- 3 435 778
- DE-A- 4 119 104
- DE-A- 10 052 505
- GB-A- 976 487

## Beschreibung

Die Erfindung betrifft einen Hydranten, insbesondere Unterflurhydranten, mit einem Mantelrohr und einem damit verbundenen Ventilgehäuse, das an ein Rohrnetz, umfassend erste Rohre, anschließbar ist und in dem ein Hauptventilkörper anordbar sind, wobei der Hauptventilkörper mit einem ersten Ventilsitz zusammenwirkt und mittels einer im Mantelrohr geführten Spindel über eine Innengarnitur betätigbar ist, und mit einer Buchse zwischen einerseits dem Ventilgehäuse und/oder dem Mantelrohr und andererseits dem Hautpventilkörper, die den ersten Ventilsitz bereitstellt und zumindest zwei Aussparungen zur Aufnahme von jeweils einem Dichtring zwischen einerseits der Buchse und andererseits dem Ventilgehäuse und/oder dem Mantelrohr aufweist, wobei die Aussparungen in Ebenen verlaufen, die im Wesentlichen senkrecht zueinander stehen.

Ein Unterflurhydrant ist, beispielsweise, aus der DE 41 19 104 A1 bekannt. Dort ist das Mantelrohr mit dem Ventilgehäuse als einstückiges Gußteil ausgebildet, was unter anderem zu einem schweren, in seinem Einsatzgebiet beschränkten und korrosionsanfälligen Unterflurhydranten führt.

Grundsätzlich sind auch mehrteilige, höhenvertellbare Hydranten bekannt, siehe beispielsweise die DE 100 28 655 A1.

Des Weiteren ist eine Vielzahl von Dränagevorrichtungen bzw. Entwässerungsvorrichtungen für Hydranten bekannt So offenbart die US 5,368,064 beispielsweise einen Hydranten, in dem mehrere Auslassöffnungen vorgesehen sind, die jeweils über Ohren eines Ventilkörpers verschlossen werden können. Aus der DE 197 22 578 A1 ist eine weitere Dränagevorrichtung für einen Hydranten bekannt, die zwei Schalenteile, die zu einer Schürzenform zusammenbaubar sind und aus Polyethylen hergestellt sein können, und Dränagematten bzw. Sickerpackungen, beispielsweise aus Polypropylen, umfasst.

Auch aus der DE 100 52 505 A1 ist ein Unterflurhydrant bekannt, bei dem der Hauptventilkörper axial in einem Ventilsitzring dichtend geführt ist, während der Rückschlagventilkörper in Form einer Kugel dicht an einer Formdichtung anliegt. Der Ventilsitzring ist dabei an seinen beiden Rändern aufgeweitet, um an seinem oberen, dem Rückschlagventilkörper abgewandten Rand über einen Dichtring für eine Dichtung zum Mantelrohr und an seinem unteren, dem Rückschlagventilkörper zugewandten Rand über die Formdichtung für eine Dichtung zum Ventilgehäuse zu sorgen. Dies stellt einen Komplizierten und monageaufwendigen Aufbau dar.

Ein gattungsgemäßer Hydrant ist aus der DT 25 13 712 A1 bekannt. Der bekannte Hydrant zeichnet sich durch ein besonderes Flanschverbindungselement zwischen einem Mantelrohrflansch und einem Ventilgehäuseflansch aus, das dafür sorgt, dass im Normalbetrieb eine einwandfreie dichtende Flanschverbindung vorliegt, die jedoch eine Sollbruchstelle besitzt, die sich beim Anfahren des Hydranten durch ein Baufahrzeug bei Erreichen der Grenzbelastung schnell löst und ein Abfallen des Mantelrohrs vom Ventilgehäuse ermöglicht.

Die DE-A-26 21 163 hat einen Unterflurhydranten zum Gegenstand, bei dem keine Fremdteile die Funktion seines Kolbenventils stören können. Hierbei weist der Absperrkolben, der in Offenstellung in einer Ausbauchung des Mantelrohres oberhalb des Sitzzylinders sitzt, an seinem oberen Ende eine schräg nach oben und außen gerichtete, durch den Gummimantel gebildete elastische Abstreiflippe mit einer im entspannten Zustand über den Innendurchmesser des Sitzzylinders hinausragende und im eingefahrenen Zustand des Absperrkolbens fest an der Innenwand des Sitzzylinders anliegenden Abstreifkante aufweist und an seinem unteren Ende mit einem durch den Gummimantel gebildeten Dreirand versehen ist. Bei dieser Anordnung ist eine Entwässerung des Hydranten im geschlossenen Zustand nicht gegeben.

Gegenstand der GB-A-976 487 ist ebenfalls ein Hydrant zur unterirdischen Installation mit einem Steigrohr aus Kunststoff zwischen den verschiedenen Ventilteilen unterhalb der Straßenoberfläche, wobei das untere Ende des Steigrohrs mit Hilfe eines Bajonettgewindes mit der Sockelbuchse verbunden ist. Auch bei dieser Anordnung findet keine brauchbare Entwässerung des Hydranten im geschlossenen Zustand statt. Es besteht daher die Aufgabe, die Entwässerung des Hydranten im geschlossenen Zustand zu verbessern.

Gelöst wird diese Aufgabe mit den kennzeichnenden Merkmalen des Anspruchs 1. Vorteilhafte Ausgestaltungen sind den Unteransprüchen entnehmbar.

Der Erfindung liegt somit die überraschende Erkenntnis zugrunde, dass durch eine Multifunktionsbuchse der Aufbau eines Unterflurhydranten vereinfacht und somit montagefreundlicher wird. Die Multifunktionsbuchse zeichnet sich dabei dadurch aus, dass sie zeitgleich als Dichtbuchse eine radiale sowie axiale Abdichtung des Unterflurhydranten sicherstellt, als Führungsbuchse das Schalten zwischen Schließ- und Öffnungspositionen erleichtert, als Versteifungsbuchse der Haltbarkeit des Unterflurhydranten dient und als Verteilungsbuchse Bestandteil eines Dränagesystems bzw. einer Entwässerungsvorrichtung ist. Die Entwässerungsvorrichtung zeichnet sich erfindungsgemäß vorzugsweise zusätzlich durch ein spezielles Wasser-Verteilungssystem unter Einsatz mindestens zweier Bohrungen, die den Innenraum des Unterflurhydranten mit dessen Außenraum verbinden, zur Gewährleistung einer wunschgemäßen Entwässerung aus. Durch bevorzugtes Ausformen zumindest des Gehäuses eines Unterflurhydranten aus Polyethylen wird zudem eine Materialhomogenität erzielt, die insbesondere eine große Flexibilität im Zusammenbau sowie Einsatzbereich zusätzlich zu einer gesteigerten Qualität betreffend Hygiene und Haltbarkeit bei einfachem Aufbau nach einem Baukastenprinzip liefert.

Weitere Merkmale und Vorteile der Erfindung ergeben sich aus der nachfolgenden Beschreibung, in der erfindungsgemäße Ausführungsbeispiele anhand von schematischen Zeichnungen im Einzelnen erläutert sind. Dabei zeigen:
- Figur 1: eine Explosionsansicht eines Rohrnetzes mit einem erfindungsgemäßen Unterflurhydranten;
- Figur 2a: eine perspektivische Draufsicht auf einen erfindungsgemäßen Unterflurhydranten;
- Figur 2b: eine Querschnittsansicht durch den Unterflurhydranten von Figur 2a;
- Figur 3a: eine Seitenansicht einer Ausführungsform eines erfindungsgemäßen Unterflurhydranten;
- Figur 3b: eine Längsschnittansicht der Ausführungsform von Figur 3a, in der Schnittebene B-B von Figur 3a, mit geschlossenem Hauptventil;
- Figur 4: eine Teilschnittansicht, ähnlich Figur 3b, eines weiteren erfindungsgemäßen Unterflurhydranten mit geöffnetem Hauptventil; und
- Figur 5: eine perspektivische Ansicht einer Buchse für einen erfindungsgemäßen Unterflurhydranten.

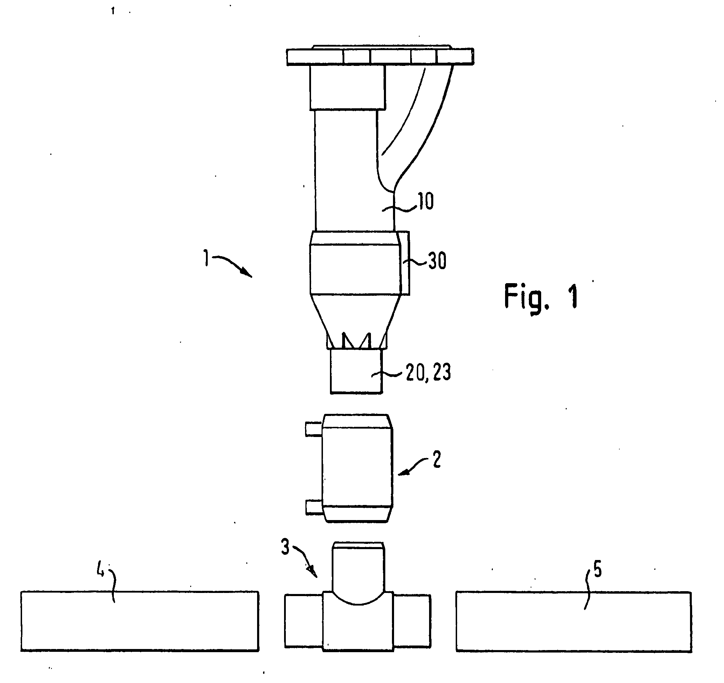

Wie Figur 1 zu entnehmen ist, ist ein erfindungsgemäßer Unterflurhydrant 1 über eine standardgemäße Schweißmuffe 2, wie eine Heizwendelschweißmuffe, mit einem T-Stück 3 zum Anschluß an zwei Rohre 4,5 verbindbar. Seinerseits umfaßt der Unterflurhydrant 1 ein Mantelrohr 10 in Verbindung mit einem Ventilgehäuse 20 in Form eines Spitzendes 23 und einer Entwässerungsvorrichtung 3 0. Dabei stellt das Mantelrohr 10 ein Oberteil und das Spitzende 23 ein Unterteil dar, wobei diese beiden Teile entweder direkt, wie in Figur 1 gezeigt, oder indirekt, unter Zwischenschaltung eines nicht dargestellten Mittelteils in Form eines Rohrs, miteinander verbunden werden können. Dies ermöglicht, nach Art eines Baukastenprinzips, erfindungsgemäße Unterflurhydranten 1 in ihrer Länge an die speziellen Gegebenheiten eines Einsatzortes, wie die Tiefe eines Baugrabens oder dergleichen, anzupassen. Die Anpassung kann dabei aufgrund des modularen Aufbaus des Unterflurhydranten 1 mit Oberteil, Mittelteil und Unterteil vor Ort stattfinden, indem entweder kein Mittelteil oder ein Mittelteil einer gewünschten Länge zwischen das Oberteil und das Unterteil eingebracht wird. Der modulare Aufbau ermöglicht somit auch den Einsatz nicht gängiger Baulängen von Unterflurhydranten. Zusätzlich zu dieser hohen Flexibilität in der Bemaßung des erfindungsgemäßen Unterflurhydranten 1 bringt der modulare Aufbau desselben auch eine Reduktion an zu lagernden und zur jeweiligen Baustelle zu transportierenden Bauteilen mit sich. Dies reduziert in großem Maße die Kosten, zusätzlich zur erhöhten Flexibilität vor Ort.

Für die Verbindung zwischen dem Mantelrohr 10 und dem Spitzende 23, gegebenenfalls unter Zwischenschaltung eines Rohrs, können verschiedene Techniken, wie Fügetechniken, zum Einsatz kommen, was ebenfalls der Flexibilität dient. Ein erfindungsgemäßer Unterflarhydrant 1 kann auch auf verschiedene Weisen mit einem Rohrnetz 4, 5 verbunden werden, ist also nicht auf den Einsatz eines Spitzendes beschränkt. Es kann z.B. auch eine herkömmliche Flanschverbindung zum Einsatz kommen.

Besonders bevorzugt ist es, sowohl das Mantelrohr 10 als auch das Spitzende 23 des Unterflurhydranten 1 aus Polyethylen, insbesondere HDPE (High Density Polyethylen), vorzugsweise PE 100, auszubilden. Dies führt zu Rohrnetzen mit Rohren 4, 5 und Verbindungsstükken, wie das T-Stück 3, die in bewährter Weise aus Polyethylen hergestellt sind, die eine Materialhomogenität aufweisen. Diese Homogenität in der Materialauswahl erleichtert weiter die Lagerhaltung, da beispielsweise auch möglicherweise zwischen Mantelrohren 10 und Spitzenden 23 einzusetzende Rohre ebenfalls aus Polyethylen ausgebildet sein können, also grundsätzlich den Rohren 4 und 5 entsprechen können. Aufgrund der Materialhomogenität existiert auch eine große Freiheit in der Wahl der Anschlußmöglichkeiten zwischen den verschiedenen Modulen, wobei hier besonders baustellengerechte Schweißverbindungen, bspw. durch Muffenschweißen oder Spiegelschweißen, hervorzuheben sind, die im Falle eines bislang üblichen Graubauß-Untertlurhydranten nicht möglich wären. Auch die Bearbeitung der Module ist durch den Einsatz von Polyethylen vereinfacht. Es ist zudem darauf hinzuweisen, daß der Einsatz von Polyethylen als Herstellungsmaterial für den erfindungsgemäßen Unterflurhydranten 1 auch zu einer Gewichtsreduktion führt. Ferner bringt der Einsatz von Polyethylen eine besondere Korrosionsbeständigkeit mit sich, da Polyethylen keine chemische Reaktion mit Trinkwasser bildet und somit Belagbildungen im wesentlichen vermieden werden. Also kommt es zu einer gesteigerten Hygiene im Rohrnetz insgesamt.

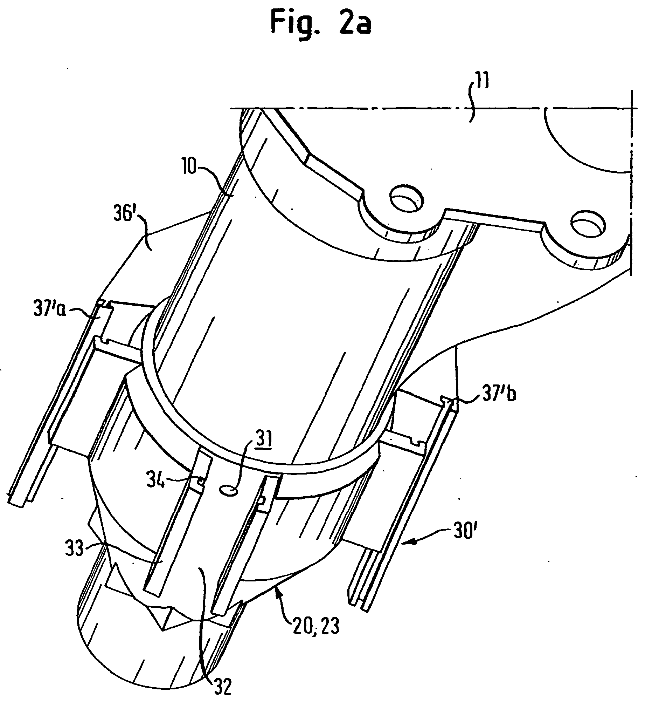

Wie Figur 2a zu entnehmen ist, läßt sich das Mantelrohr 10 über einen Deckel 11, beispielsweise aus nichtrostendem Stahl oder Messing, nach Art einer Flanschverbindung an seinem dem Spitzende 23 gegenüberliegenden Ende verschließen.

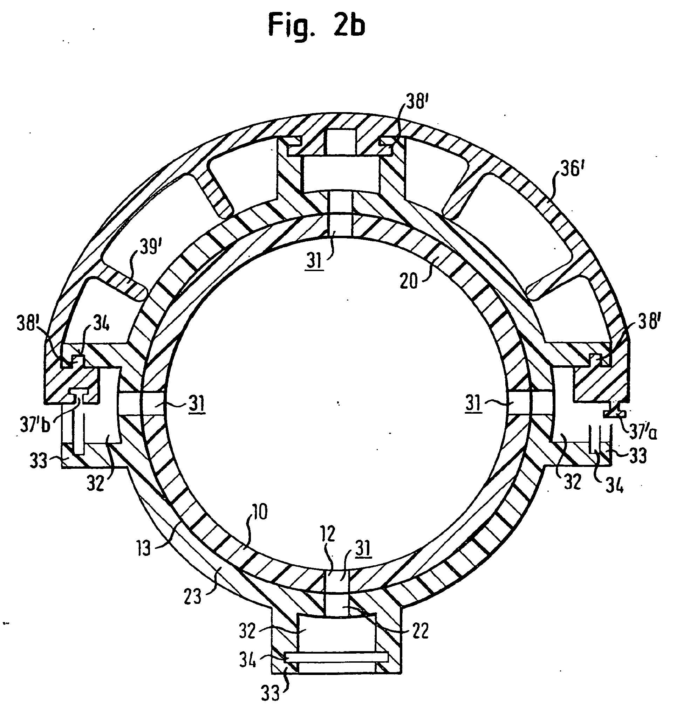

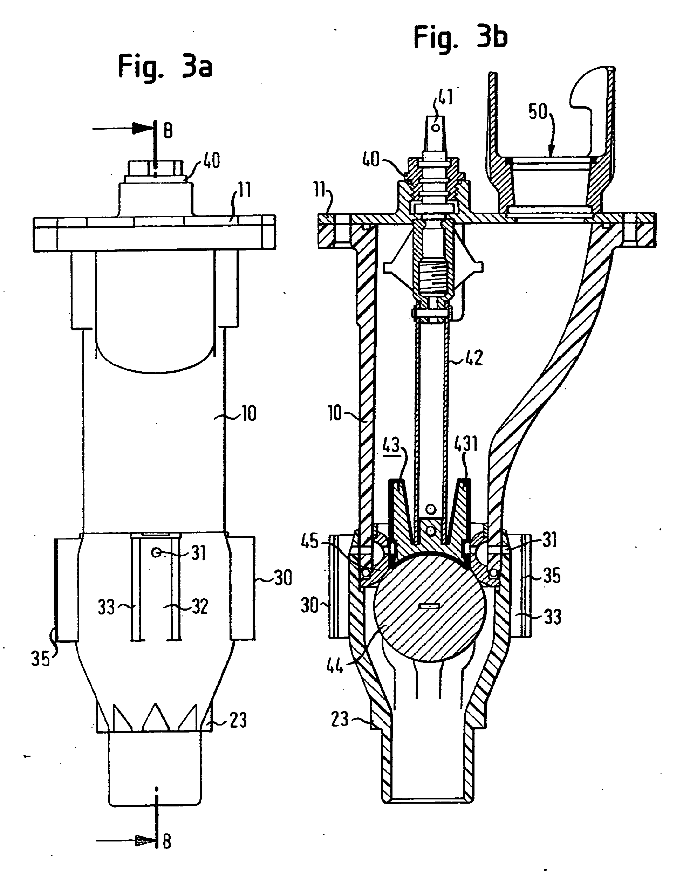

Erfindungsgemäße Unterflurhydranten 1 zeichnen sich auch durch eine besondere Entwässerungsvorrichtung 30, 30` aus. Hierzu ist den Figuren 2a und 2b zu entnehmen, daß in dem Verbindungsbereich von dem Mantelrohr 10 und dem Spitzende 23 nicht nur eine einzige Entwässerungsbohrung, wie bislang üblich, sondern vier Entwässerungsbohrungen 31 in Form von vier Bohrungen 12 in dem Mantelrohr 10 und vier Bohrungen 22 im Spitzende 23 bereitgestellt sind, so daß auch bei Verstopfung einer Entwässerungsbohrung 31, insbesondere durch Wurzelbewuchs, es nicht zu einem Ausbleiben einer Entwässerung kommt. Die Entwässerungsbohrungen 31 führen zu Entwässerungskanälen 32, die von Kanalwänden 33 begrenzt sind. Die Kanalwände 33 dienen auch als Befestigungshilfen durch Bereitstellung von Führungsnuten 34 für das wahlweise Anbringen von Sickerschalen 36', wie in den Figuren 2a und 2b gezeigt, oder Schutzkappen 35, wie beispielsweise in den Figuren 3a und 3b gezeigt. Jeder Entwässerungskanal 32 kann eine Länge bis zu ca. 100 mm aufweisen.

Durch den Einsatz einer Vielzahl von Entwässerungsbohrungen 31 wird die Entleerfunktion insbesondere die Entleerleistung, des erfindungsgemäßen Unterflurhydranten 1 verbessert und somit seine Zuverlässigkeit erhöht. Zusätzlich wird eine Variabilität bei der Abdeckung der Entwässerungskanäle 32 ermöglicht. So lassen sich einfache Schutzkappen 35 insbesondere zum Schutz vor Steinen, Schmutz und/oder einwachsendem Wurzelwerk oder aber auch Sikkerschalen 36' zum zusätzlichen Bereitstellen von :nicht gezeigten Sickerpackungen verwenden. Die Entscheidung, ob Schutzkappen 35 oder Sickerschalen 36' zu verwenden sind, kann noch beim Einbauen des Unterflurhydranten in einer Baugrube stattfinden, was wiederum dem Baukastenprinzip zu Gute kommt. Wird sich beispielsweise anfänglich für den Einsatz von Schutzkappen 35 entschieden, so kann, zu einem beliebigen späteren Zeitpunkt, eine Nachrüstung mit Sickerschalen 36 problemlos vor Ort stattfinden.

Sowohl die Schutzkappen 35 als auch die Sickerschalen 36' sind über die Führungsnuten 34 einfach aufsteckbar. Dabei kommen pro Unterflurhydrant 1 entweder vier Schutzkappen 35 oder zwei Sickerschalen 36' zum Einsatz. Die Sickerschalen 36' umfassen gemäß Figur 2b zusätzlich zu Schienen 38' zum Einführen in die Führungsnuten 34 jeweils einen Vorsprung 37'a und eine Ausnehmung 37'b zur. Verbindung zweier Sickerschalen 36' und Rippen 39' zur Versteifung.

In den Figuren 3a und 3b ist ein erfindungsgemäßer Unterflurhydrant 1 mit seinem Mantelrohr 10, verschlossen an einem Ende mit einem Deckel 11 und verbunden an seinem anderen Ende mit einem Spitzende 23, in Entwässerungsstellung, also mit geschlossenem Hauptventil und somit mit geöffneter Entleerung, dargestellt. Die Entwässerungsvorrichtung 30 gemäß den Figuren 3a und 3b zeigt den Einsatz von Schutzkappen 35, eingefügt in Führungsnuten 34 in Kanalwänden 33 zur Begrenzung von Entwässerungskanälen 32 in Verbindung mit Entwässerungsbohrungen 31.

Insbesondere Figur 3b ist ein Aufsatz 40 zu entnehmen, durch den sich eine Ventilspindel 41 erstreckt, die über eine Innengarnitur 42 in dem Mantelrohr 10 in Wirkverbindung mit einem Hauptventilkörper 43 steht, der wiederum in Verbindung mit einem schwimmend gelagerten Rückschlagventilkörper 44 in Form einer Kugel bringbar ist. Zwischen den Ventilkörpern 43 und 44 einerseits und der Gehäusewandung des Unterflurhydranten 1, bereitgestellt durch das Mantelrohr 10 sowie das Spitzende 23, andererseits ist erfindungsgemäß eine Buchse 45 angeordnet Zudem ist Figur 3b eine Entnahmeöffnung 50 zu entnehmen, durch die bei geöffnetem Hauptventil Wasser aus dem Rohrnetz 4, 5 entnehmbar ist.

Der Hauptventilkörper 43 weist eine nicht gezeigte kugelsegmentförmige Ausnehmung an seinem dem Rückschlagventilkörper 44 zugewandten Ende, vier Flügel 431 an seinem vom Rückschlagventilkörper 44 abgewandten Ende sowie eine Rille 430 zwischen besagten Enden auf. In Figur 3b verläuft die Rille 430 im Bereich der Bohrungen 12 und 22 im Mantelrohr-10 beziehungsweise Spitzende 23, um ein Entwässern zu gestatten.

Der Hauptventilkörper 43 besteht in üblicher Weise aus Metall, insbesondere nichtrostendem Stahl oder Messing, mit einem Überzug aus Gummi, Neopren, Teflon oder dergleichen. Die Buchse 45 ist ebenfalls vorzugsweise aus einem Metall, beispielsweise nichtrostendem Stahl oder Messing, ausgebildet.

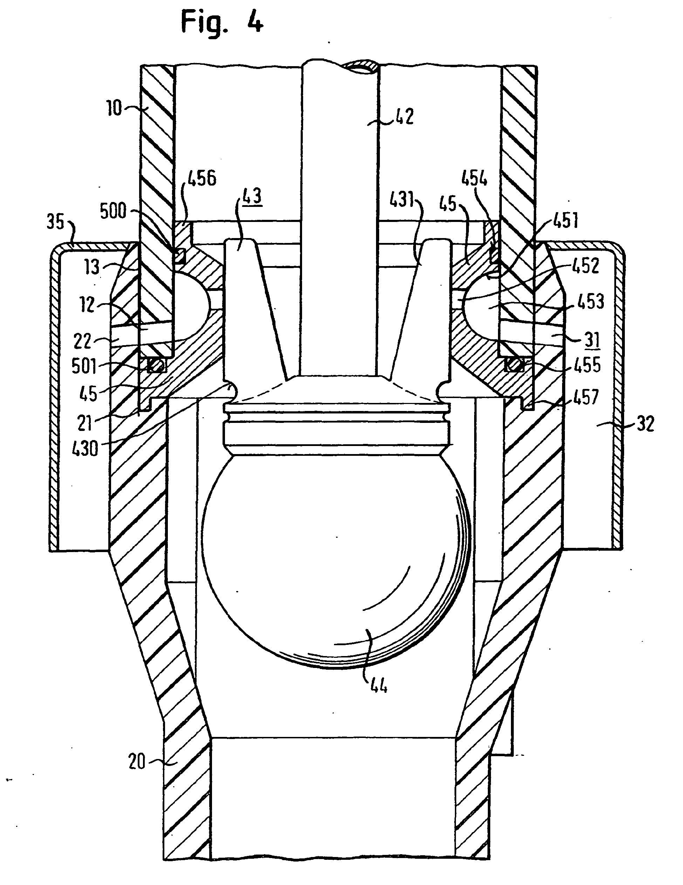

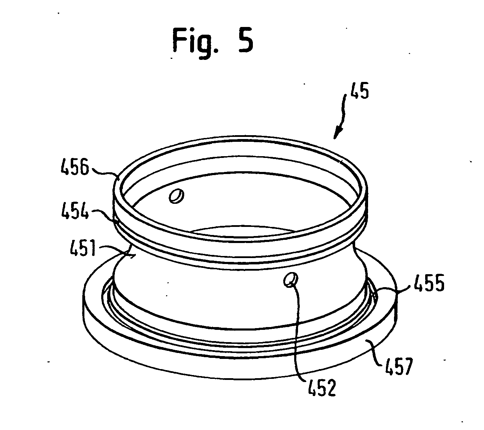

Die Buchse 45 weist ihrerseits, wie insbesondere den Figuren 4 und 5 zu entnehmen ist, Bohrungen 452 im Bereich einer mittigen rillenartigen Ausnehmung 451 auf, die im Entwässerungsfall, wenn also der Hauptventilkörper 43 in seiner Schließposition steht, wie in der Figur 3b dargestellt, mit der Rille 430 des Hauptventilkörpers 43 im wesentlichen fluchten. In dieser Position ist einerseits kein Wasser aus dem Rohrnetz 4, 5 entnehmbar, jedoch kann andererseits Wasser aus dem Bereich innerhalb des Mantelrohrs 10 und oberhalb des Hauptventilkörpers 43 über die Rille 430 und die Bohrungen 452 in eine Verteilungskammer 453 gelangen, die durch die Ausnehmung 451 in der Buchse 45 zwischen der Buchse 45 und dem Mantelrohr 10 bereitgestellt ist, so daß dann ein Austritt des Wassers über die Bohrungen 12 und 22 in die Entwässerungskanäle 32 stattfinden kann. Wird der Hauptventilkörper 43 jedoch aus seiner Schließposition durch Bewegen der Ventilspindel 41 in Richtung des Spitzendes 23 verschoben, dann verschließen seine Flügel 431 die Bohrung 452 der Buchse 45 und somit die Entwässerungspfade, wie in Figur 4 dargestellt, während eine Wasserentnahme aus dem Rohrnetz 4, 5 möglich ist.

Die Buchse 45 erfüllt in einem erfindungsgemäßen Unterflurhydranten 1 somit eine Vielzahl von Funktionen, nämlich wie folgt:

### 1. Dichtbuchse

Über die Buchse 45 im Zusammenspiel mit den Ventilkörpern 43 und 44 kann in Reaktion auf die Position der Ventilspindel 41 eine Entwässerung ermöglicht oder vermieden werden. Zum Zwecke der Abdichtung, wenn also eine Entwässerung vermieden werden soll, weist die Buchse 45 noch zwei nutenartige Aussparungen 454 und 455 zur Aufnahme von Dichtringen 500 und 501 auf. Der eine Dichtring 500 ist dabei im Bereich eines Fußes 456 der Buchse 45 zwischen der Buchse 45 und dem Mantelrohr 10 so angeordnet, dass auch bei anstehenden Radialkräften sicher abgedichtet wird. Der andere Dichtring 501 ist an dem dem Fuß 456 gegenüberliegenden Ende der Buchse 45 in der Aussparung 455 zwischen der Buchse 45 und dem unteren Ende des Mantelrohrs 10 so angeordnet, dass die Dichtwirkung durch Axialkräfte unterstützt wird. Zur Sicherung der Position der Buchse 45 ist zudem auf der der Ausnehmung 455 gegenüberliegenden Fläche der Buchse 45 eine Nase 457 zum Eingreifen in eine Aussparung 21 in dem Spitzende 23 vorgesehen. Über die Dichtringe 500 und 501 läßt sich somit eine radiale sowie axiale Abdichtung des erfindungsgemäßen Unterflurhydranten 1 selbst bei nicht vermeidbaren Maßtoleranzen sowie Längendehnungen bei Temperaturschwankungen aufgrund des Einsatzes von Polyethylen als Herstellungsmaterial gewährleisten.

### 2. Führungsbuchse

Entlang der Buchse 45 sind die Ventilkörper 43 und 44 bei Bewegung der Ventilspindel 41 verfahrbar. Zu diesem Zwecke ist die Buchse 45 in ihrer Geometrie sowie Bemaßung derart ausgebildet, daß sie im Zusammenspiel mit dem schwimmend gelagerten Rückschlagventilkörper 44. sowie den Dichtungen 500, 501 Maßtoleranzen sowie thermische Expansionen des Unterflurhydranten 1, insbesondere betreffend den Mantelkörper 10 und das Spitzende 23 aus Polyethylen, ausgleichen kann.

### 3. Versteifungsbuchse

Vorzugsweise besteht die Buchse 45 aus Metall, wie bereits erwähnt, um den Unterflurhydranten 1 insgesamt zu verfestigen, so daß dem Einsatz von Polyethylen als Werkstoff des Mantelrohrs 10 sowie des Spitzendes 23 keine Festigkeitsschwächen entgegenstehen. Die Buchse 45 weist zudem eine spezielle, der Festigkeit dienende, Geometrie mit dem Fuß 456 zum Angreifen an das Mantelrohr 10 sowie der Nase 457 zum Eingreifen in die Aussparung 21 in dem Spitzende 23 auf.

### 4. Verteilungsbuchse

Die Buchse 45 liefert über ihre Bohrungen 452 sowie Ausnehmung 451 ein Kanalsystem zum Entwässern des erfindungsgemäßen Unterflurhydranten 1 über die Verteilungskammer 453. Aufgrund der Existenz nicht nur einer, sondern mindestens zweier Bohrungen 452 in der Buchse 45 wird die Leistung und Gleichmäßigkeit der Entleerung des Unterflurhydranten 1 verbessert. Außerdem ermöglicht die Verteilungskammer 453 auch einen Aufbau, bei dem die Bohrungen 452 in der Buchse 45 nicht mit den Bohrungen 12 und 22 des Mantelrohrs 10 bzw. des Spitzendes 23 ausgerichtet zu sein haben. Dies erleichtert den Zusammenbau.

Die Buchse 45 ist mit jedem beliebigen Verteilungskammersystem zum Verbessern der Entwässerungsleistung des Unterflurhydranten 1 ausrüstbar.

Ein erfindungsgemäßer Unterflurhydrant weist somit eine Vielzahl von Vorteilen gegenüber bislang bekannten Unterflurhydranten auf, nämlich betreffend die Modularität (Baukastenprinzip), die Materialauswahl (Homogenität durch Auswahl von Polyethylen), die Flexibilität (Multifunktionsbuchse) sowie Sicherheit (Mehrfachentleerung).

Ein erfindungsgemäßer Unterflurhydrant 1 ist zudem auf äußerst einfache Weise, nämlich bspw. wie folgt, herstellbar:

Zuerst wird das. Unterteil des Unterflurhydranten 1 in Form des Spitzendes 23 in einem Kunststoffspritzgießverfahren hergestellt, einschließlich der Kanalwände 33.

Als nächstes wird die Buchse 45 gefertigt, bspw, gedreht, und mit den Dichtringen 500 und 501 vormontiert.

Danach wird der Rückschlagventilkörper 44 als Doppelabsperrventil bereitgestellt und in das Spitzende 23 eingelegt

Sodann wird die vormontierte Buchse 45 mit den Dichtringen 500 und 501 axial in das Spitzende 23 eingebracht, durch Einpressen der Nase 457 in die Aussparung 21. Die dabei entstehende Verankerung dient dem Aufnehmen radialer Kräfte im späteren Betrieb des Unterflurhydranten 1. Beim Verankern der Dichtbuchse 45 im Spitzende 23 dienen die Kanalwände 33 als Art Arretierhilfen, nämlich zur radialen Positionierung der Bohrungen 452.

Die Dichtringe 500 und 501 sorgen im Betrieb für axiale und radiale Abdichtungen. Zudem ermöglichen sie einen Toleranzausgleich, verursacht entweder durch Maßtoleranzen beim Fügen oder Längenausdehnungen des Polyethylens des Mantelrohrs 10 und des Spitzendes 23 bei starken Temperaturschwankungen oder Druckeinwirkungen des Durchflussmediums, insbesondere Wasser.

Daraufhin werden der Hauptventilkörper 43 und die Innengarnitur 42 eingebaut.

Sodann wird der Deckel 11 auf dem Mantelrohr 10 befestigt.

Abschließend werden die Bohrungen 12 und 22 in das Mantelrohr 10 und das Spitzende 23 eingebracht und entweder Schutzkappen 35 oder Sickerschalen 36' über die Entwässerungskanäle 32 aufgesteckt.

Als nächstes kann ein nicht gezeigtes Zusatzrohr aus herkömmlichen Polyethylen-Rohren ausgesucht, auf eine gewünschte Baulänge, einschließlich einer Normbaulänge, abgelängt und mit dem Spitzende 23 verschweißt werden. Altemativerweise kann jedoch auch das Mantelrohr 10 direkt mit dem Spitzende 23 verschweißt werden. Während des jeweiligen Schweißvorganges wird das zusätzliche Rohr bzw. das Mantelrohr 10 unter Einwirkung einer Axialkraft fest auf die Buchse 45 aufgeschoben Schweißgut längs einer Schweißnaht 13 bildet dann eine weitere Unterstützung in der Verbindung, nämlich in Form einer homogenen Verankerung der Dichtbuchse 45 mit sowohl dem Mantelrohr 10 als auch dem Spitzende 23.

## Patentansprüche

1. Hydrant, insbesondere Unterflurhydrant (1), mit einem Mantelrohr (10), mit einem damit verbundenen Ventilgehäuse (20), das an ein Rohrnetz, umfassend erste Rohre (4, 5), anschließbar ist und in dem ein Hauptventilkörper (43) anordbar ist, wobei der Hauptventilkörper (43) mit einem ersten Ventilsitz zusammenwirkt und mittels einer im Mantelrohr (10) geführten Spindel (41) über eine Innengarnitur (42) betätigbar ist, und mit einer Buchse (45) zwischen einerseits dem Ventilgehäuse (20) und/oder dem Mantelrohr (10) und andererseits dem Hauptventilkörper (43), wobei die Buchse (45) den ersten Ventilsitz bereitstellt und zumindest einer ersten und einer zweiten Aussparung (454, 455) zur Aufnahme von jeweils einem Dichtring (500, 501) zwischen einerseits der Buchse (45) und andererseits dem Ventilgehäuse (20) und/oder dem Mantelrohr (10) aufweist, wobei die Aussparungen (454, 455) in Ebenen verlaufen, die senkrecht zueinander stehen, **dadurch gekennzeichnet, dass**
die Buchse (45) zumindest zwei verschliessbare Bohrungen (452) und zumindest eine, rillen- oder nutartige Ausnehmung (451) sur Bildung eines Kanals aufweist, die zwischen der Buchse (45) und dem Ventilgehäuse (20) und/oder dem Mantelrohr (10) zumindest eine Verteilungskammer (453) als Teil einer Entwässerungsvorrichtung (30, 30') festlegt, in die einerseits die Bohrung (452) der Buchse (45) und andererseits zumindest eine Entwässerungsbohrung (31), die eine Bohrung (22) durch das Ventilgehäuse (20) und/oder eine Bohrung (12) durch das Mantelrohr (10) umfasst, mündet.

2. Hydrant nach Anspruch 1, **dadurch gekennzeichnet, dass**
beidseits der Verteilungskammer (453) jeweils zumindest einer der Dichtringe (500, 501) zwischen der Buchse (45) und dem Mantelrohr (10) und/oder dem Ventilgehäuse (20) angeordnet ist.

3. Hydrant nach einem der vorangehenden Ansprüche, **dadurch gekennzeichnet, dass**
in dem Ventilgehäuse (20) ein Rückschlagventilkörper (44) auf der der Spindel (41) abgewandten Seite des Hauptventilkörpers (43) anordbar ist und mit einem zweiten Ventilsitz zusammenwirkt.

4. Hydrant nach Anspruch 3, **dadurch gekennzeichnet, dass**
die Buchse (45) den zweiten Ventilsitz umfasst.

5. Hydrant nach einem der Ansprüche 3 oder 4, **dadurch gekennzeichnet, dass**
der Rückschlagventilkörper (44), der vorzugsweise eine schwimmend gelagerte Kugel umfasst, die zumindest teilweise in den Hauptventilkörper (43) eindringen kann, und/oder der Hauptventilkörper (43), der vorzugsweise an seinem dem Rückschlagventilkörper (44) zugewandten Ende eine im wesentlichen kugelsegmentförmige Ausnehmung, an seinem von dem Rückschlagventilkörper (44) abgewandten Ende zumindest zwei Flügel (431) und zwischen diesen beiden Enden zumindest eine der Buchse (45) zugewandte, vorzugsweise rillen- oder nutartige, Ausnehmung (430) umfasst, entlang der Buchse (45) führbar ist bzw. sind.

6. Hydrant nach Anspruch 5, **dadurch gekennzeichnet, dass**
im geschlossenen Zustand des Hauptventils, umfassend den mit der Spindel (41) über die sich durch das Mantelrohr (10) erstreckende Innengarnitur (42) in Verbindung stehenden Hauptventilkörper (43), eine Entleerung des Durchflussmediums, insbesondere eine Entwässerung des Wassers, aus dem Mantelrohr (10), vorbei an den Flügeln (431), über die Ausnehmung (430) des Hauptventilkörpers (43) sowie durch die Bohrungen (452, 22, 12) der Buchse (45) und des Ventilgehäuses (20) und/oder des Mantelrohrs (10) in zumindest einen Entwässerungskanal (32) und/oder zumindest eine Sickerpackung stattfindet, während im geöffneten Zustand besagten Hauptventils die Bohrung (452) der Buchse (45) durch einen der Flügel (431) des Hauptventilkörpers (43) zur Vermeidung einer Entleerung, insbesondere Entwässerung, verschlossen ist.

7. Hydrant nach einem der vorangehenden Ansprüche, **dadurch gekennzeichnet, dass**
die Büchse (45) zwei, drei oder vier Bohrungen (452) und der Hauptventilkörper (43) zwei, drei oder vier Flügel (431) umfasst.

8. Hydrant nach einem der vorangehenden Ansprüche, **dadurch gekennzeichnet, dass** die erste Aussparung (454) der Buchse (45) längs deren dem Rohrnetz abgewandten Rand, vorzugsweise im Bereich einer fußartigen Verlängerung (456), zur Aufnahme eines ersten der Dichtringe (500) zwischen der Buchse (45) und dem Mantelrohr (10) und/oder dem Ventilgehäuse (20) angeordnet ist.

9. Hydrant nach einem der vorangehenden Ansprüche, **dadurch gekennzeichnet, dass** die zweite Aussparung (455) der Buchse (45) längs deren dem Rohrnetz zugewandten Rand zur Aufnahme eines zweiten der Dichtringe (501) zwischen der Buchse (45) und dem Mantelrohr (10) und/oder dem Ventilgehäuse (20) angeordnet ist, wobei vorzugsweise zwischen der ersten und zweiten Aussparung (454, 455) die Ausnehmung (451) der Buchse (45) angeordnet ist.

10. Hydrant nach einem der vorangehenden Ansprüche, **dadurch gekennzeichnet, dass** die Buchse (45) in eine Aussparung (21) des Ventilgehäuses (20), vorzugsweise über zumindest eine nasenartige Verlängerung (457) längs ihres dem Rohrnetz zugewandten Rands, eingreift.

11. Hydrant nach Anspruch 10, **dadurch gekennzeichnet, dass** die nasenartige Verlängerung (457) sich um den kompletten Umfang der Buchse (45), vorzugsweise auf der der zweiten Aussparung (455) der Buchse (45) gegenüberliegenden Fläche, erstreckt.

12. Hydrant nach einem der Ansprüche 3 bis 11, **dadurch gekennzeichnet, dass** die Buchse (45), der Hauptventilkörper (43) und/oder der Rückschlagventilkörper (44) zumindest teilweise aus einem Metall, insbesondere nichtrostendem Stahl oder Messing, ausgeformt ist bzw. sind.

13. Hydrant nach Anspruch 12, **dadurch gekennzeichnet, dass** das Metall der Buchse, des Hauptventilkörpers und/oder der Rückschlagventilkörpers mit Gummi, Neopren, Teflon oder einem Kunststoff, insbesondere Polyethylen, umgeben, insbesondere beschichtet, ist.

14. Hydrant nach einem der vorangehenden Ansprüche , **dadurch gekennzeichnet, dass** zumindest zwei Entwässerungsbohrungen (31) vorgesehen sind.

15. Hydrant nach einem der vorangehenden Ansprüche, **dadurch gekennzeichnet, dass** die Entwässerungsvorrichtung (30, 30') in Wirkverbindung mit jeder Entwässerungsbohrung (31) zumindest einen, insbesondere durch zwei Kanalwände (33) begrenzten, Entwässerungskanal (32) umfasst, wobei vorzugsweise im Bereich jeder Entwässerungsbohrung (31) ein Entwässerungskanal (32) verläuft.

16. Hydrant nach Anspruch 15, **dadurch gekennzeichnet, dass** jede Kanalwand (33) fest mit dem Ventilgehäuse (20) verbunden, vorzugsweise in einem mit dem Ventilgehäuse (20) ausgeformt, ist.

17. Hydrant nach Anspruch 15 oder 16, **dadurch gekennzeichnet, dass** jeder Entwässerungskanal (32) mit einer Schutzkappe (35) oder einer Sickerschale (36') zumindest im Bereich jeder Entwässerungsbohrung (31) überdeckbar ist, wobei vorzugsweise vier Entwässerungsbohrungen (31), vier Schutzkappen (35) und/oder zwei Sickerschalen (36') vorgesehen sind.

18. Hydrant nach Anspruch 17, **dadurch gekennzeichnet, dass** jede Kanalwand (33) zumindest eine, vorzugsweise dem entsprechenden Entwässerungskanal (32) zugewandte und sich entlang besagtem Entwässerungskanal (32) erstreckende, Führungsnut (34) zum lösbaren Befestigen der Schutzkappe (35) oder Sickerschale (36') umfasst.

19. Hydrant nach Anspruch 18, **dadurch gekennzeichnet, dass** jede Schutzkappe (35) und/oder jede Sickerschale (36') mit zumindest zwei Schienen (38') zum Eingriff in Führungsnuten (34) der Kanalwände (33) bereitgestellt ist bzw. sind, wobei jede Sickerschale (36') vorzugsweise vier Schienen (38') umfasst.

20. Hydrant nach einem der Ansprüche 17 bis 19, **dadurch gekennzeichnet, dass** jede Sickerschale (36') mit zumindest einem Vorsprung (37'a) und/oder zumindest einer Ausnehmung (37'b) zum Eingriff in zumindest eine. Ausnehmung (3 7'b) bzw. an zumindest einen Vorsprung (37'a) einer anderen Sickerschale (36') bereitgestellt ist.

21. Hydrant nach einem der Ansprüche 17 bis 20, **dadurch gekennzeichnet, dass** jede Sickerschale (36') mit einer Vielzahl von dem Ventilgehäuse zugewandten Kammern zur Aufnahme von Sickerpackungen und/oder mit einer Vielzahl von dem Ventilgehäuse (20) zugewandten Rippen (39') zur Verstärkung bereitgestellt ist.

22. Hydrant nach einem der vorangehenden Ansprüche, **dadurch gekennzeichnet, dass** das Mantelrohr (10), das damit direkt oder indirekt über zumindest ein zweites Rohr verbindbare Ventilgehäuse (20) und/oder das zweite Rohr aus einem Kunststoff, insbesondere aus Polyethylen, ausgebildet ist bzw. sind.

23. Hydrant nach einem der vorangehenden Ansprüche, **dadurch gekennzeichnet, dass** das Ventilgehäuse (20) zumindest ein Flanschende, Schweißmuffenende und/oder Spitzende (23) umfasst.

24. Hydrant nach einem der vorangehenden Ansprüche, **dadurch gekennzeichnet, dass** das Mantelrohr (10) an seinem von dem Ventilgehäuse (20) abgewandten Ende mit einem Deckel (11) verschließbar ist, wobei der Deckel (11) vorzugsweise eine Entnahmeöffnung (50) sowie eine Öffnung für die Spindel (41) umfasst, über eine Flanschverbindung, Schweißverbindung oder Schraubverbindung befestigbar ist, Metall, insbesondere nichtrostenden Stahl, Guss oder Messing umfasst und/oder zumindest auf seiner dem Innenraum des Mantelrohres zugewandten Fläche, vorzugsweise der Deckel (11) im wesentlichen vollständig, aus einem Kunststoff, insbesondere Polyethylen, ausgebildet ist.

25. Hydrant nach einem der vorangehenden Ansprüche, **dadurch gekennzeichnet, dass** das Mantelrohr (10) mit dem Ventilgehäuse (20) oder dem zweiten Rohr und/oder das Ventilgehäuse (20) mit dem Verbindungsstück (3) oder zumindest einem ersten Rohr verschweißbar ist bzw. sind, insbesondere unter Zwischenschaltung zumindest einer Schweißmuffe (2), wie einer Heizwendelschweißmuffe.

26. Hydrant nach einem der Ansprüche 14 bis 25, **dadurch gekennzeichnet, dass** HDPE, insbesondere PE 100, als Polyethylen ausgewählt ist.

## Claims

1. Hydrant, in particular ground hydrant (1), with a tubular casing (10), with a valve housing (20) which is connected to it and can be connected to a pipe network comprising first pipes (4, 5) and in which can be arranged a main valve body (43), the main valve body (43) co-operating with a first valve seat and being capable of being actuated by means of a spindle (41) guided in the tubular casing (10) through an internal fitting (42), and with a bush (45) between on the one hand the valve housing (20) and/or the tubular casing (10) and on the other hand the main valve body (43), the bush (45) providing the first valve seat and exhibiting at least one first and one second recess (454, 455) in each case for reception of a sealing ring (500, 501) between on the one hand the bush (45) and on the other hand the valve housing (20) and/or the tubular casing (10), the recesses (454, 455) running in planes which stand at right angles to one another, **characterised in that** the bush (45) exhibits at least two closable bores (452) and at least one groove-type or slot-type recess (451) to form a channel and which between the bush (45) and the valve housing (20) and/or the tubular casing (10) defines at least one distribution chamber (453) as part of a water drainage device (30, 30') into which debouches on the one hand the bore (452) of the bush (45) and on the other hand at least one water drainage bore (31) which comprises a bore (22) through the valve housing (20) and/or a bore (12) through the tubular casing (10).

2. Hydrant according to claim 1, **characterised in that** in each case at least one of the sealing rings (500, 501) between the bush (45) and the tubular casing (10) and/or the valve housing (20) is arranged on either side of the distribution chamber (453).

3. Hydrant according to one of the preceding claims, **characterised in that** a non-return valve body (44) can be arranged in the valve housing (20) on the side of the main valve body (43) facing away from the spindle (41) and co-operates with a second valve seat.

4. Hydrant according to claim 3, **characterised in that** the bush (45) comprises the second valve seat.

5. Hydrant according to one of claims 3 or 4, **characterised in that** the non-return valve body (44), which preferably comprises a floating ball which can penetrate at least partly into the main valve body (43), and/or the main valve body (43), which preferably at its end facing towards the non-return valve body (44) comprises an essentially ball segment-shaped recess, at its end facing away from the non-return valve body (44) comprises at least two vanes (431) and between these two ends comprises at least one preferably groove-type or slot-type recess (430) facing towards the bush (45), can be guided along the bush (45).

6. Hydrant according to claim 5, **characterised in that** in the closed state of the main valve, comprising the main valve body (43) in connection with the spindle (41) through the internal fitting (42) extending through the tubular casing (10), the medium flowing through, in particular the water, is drained from the tubular casing (10) past the vanes (431) through the recess (430) of the main valve body (43) and through the bores (452, 22, 12) of the bush (45) and the valve housing (20) and/or the tubular casing (10) into at least one water drainage channel (32) and/or at least one drainage packing, whereas in the opened state of said main valve the bore (452) of the bush (45) is closed by one of the vanes (431) of the main valve body (43) to prevent drainage, in particular drainage of water.

7. Hydrant according to one of the preceding claims, **characterised in that** the bush (45) comprises two, three or four bores (452) and the main valve body (43) comprises two, three or four vanes (431).

8. Hydrant according to one of the preceding claims, **characterised in that** the first recess (454) of the bush (45) is arranged along its edge facing away from the pipe network, preferably in the area of a foot-like extension (456), for receiving a first one of the sealing rings (500) between the bush (45) and the tubular casing (10) and/or the valve housing (20).

9. Hydrant according to one of the preceding claims, **characterised in that** the second recess (455) of the bush (45) is arranged along its edge facing towards the pipe network for receiving a second of the sealing rings (501) between the bush (45) and the tubular casing (10) and/or the valve housing (20), the recess (451) of the bush (45) preferably being arranged between the first and second recess (454, 455).

10. Hydrant according to one of the preceding claims, **characterised in that** the bush (45) engages in a recess (21) of the valve housing (20), preferably through at least one nose-like extension (457) along its edge facing towards the pipe network.

11. Hydrant according to claim 10, **characterised in that** the nose-like extension (457) extends around the complete circumference of the bush (45), preferably on the surface lying opposite the second recess (455) of the bush (45).

12. Hydrant according to one of claims 3 to 11, **characterised in that** the bush (45), the main valve body (43) and/or the non-return valve body (44) is or are formed at least partly of a metal, in particular stainless steel or brass.

13. Hydrant according to claim 12, **characterised in that** the metal of the bush, the main valve body and/or the non-return valve body is surrounded, in particular coated, with rubber, neoprene, Teflon or a plastic, in particular polyethylene.

14. Hydrant according to one of the preceding claims, **characterised in that** at least two water drainage bores (31) are provided.

15. Hydrant according to one of the preceding claims, **characterised in that** in operative connection with each water drainage bore (31) the water drainage device (30, 30') comprises at least one water drainage channel (32), in particular bounded by two channel walls (33), preferably with a water drainage channel (32) running in the area of each water drainage bore (31).

16. Hydrant according to claim 15, **characterised in that** each channel wall (33) is connected securely to the valve housing (20), preferably formed in one piece with the valve housing (20).

17. Hydrant according to claim 15 or 16, **characterised in that** each water drainage channel (32) can be covered with a protective cap (35) or a drain shell (36') at least in the area of each water drainage bore (31), and preferably four water drainage bores (31), four protective caps (35) and/or two drain shells (36') are provided.

18. Hydrant according to claim 17, **characterised in that** each channel wall (33) comprises at least one guide slot (34) preferably facing towards the corresponding water drainage channel (32) and extending along said water drainage channel (32), for detachable fastening of the protective cap (34) or drain shell (36').

19. Hydrant according to claim 18, **characterised in that** each protective cap (35) and/or each drain shell (36') is or are provided with at least two rails (38') for engagement in guide slots (34) in the channel walls (33), each drain shell (36') preferably comprising four rails (38').

20. Hydrant according to one of claims 17 to 19, **characterised in that** each drain shell (36') is provided with at least one projection (37'a) and/or at least one recess (37'b) for engagement in at least one recess (37'b) and at least one projection (37'a) of another drain shell (36').

21. Hydrant according to one of claims 17 to 20, **characterised in that** each drain shell (36') is provided with a plurality of chambers facing the valve housing for receiving drainage packings and/or with a plurality of ribs (39') facing the valve housing (20) for stiffening.

22. Hydrant according to one of the preceding claims, **characterised in that** the tubular casing (10), the valve housing (20) which can be connected to it directly or indirectly through at least one second pipe, and/or the second pipe is or are made of a plastic, in particular polyethylene.

23. Hydrant according to one of the preceding claims, **characterised in that** the valve housing (20) comprises at least one flange end, welding sleeve end and/or pointed end (23).

24. Hydrant according to one of the preceding claims, **characterised in that** at its end facing away from the valve housing (20) the tubular casing (10) can be closed with a cover (11), the cover (11) preferably comprising an extraction opening (50) and an opening for the spindle (41), being capable of being fastened through a flange connection, welded connection or screwed connection, comprising metal, in particular stainless steel, cast iron or brass, and/or at least on its surface facing towards the inside of the tubular casing the cover (11) is preferably formed essentially completely of a plastic, in particular polyethylene.

25. Hydrant according to one of the preceding claims, **characterised in that** the tubular casing (10) can be welded with the valve housing (20) or the second pipe, and/or the valve housing (20) can be welded with the connecting piece (3) or at least a first pipe, in particular with at least one welding sleeve (2), like a heating coil welding sleeve, interposed.

26. Hydrant according to one of claims 14 to 25, **characterised in that** HDPE, in particular PE 100, is selected as the polyethylene.

## Revendications

1. Bouche d'incendie, en particulier bouche d'incendie souterraine (1), avec une gaine de protection (10), avec un corps de soupape (20) relié à celle-ci, qui peut être raccordé à un réseau de canalisations comprenant des premières canalisations (4,5) et dans lequel peut être disposé un corps de soupape principale (43), le corps de soupape principale (43) agissant conjointement avec un premier siège de soupape et pouvant être actionné au moyen d'une broche (41) guidée dans la gaine de protection (10) par l'intermédiaire d'une garniture intérieure (42), et avec un coussinet (45) entre, d'une part, le corps de soupape (20) et/ou la gaine de protection (10), et d'autre part, le corps de soupape principale (43), le coussinet (45) mettant à disposition le premier siège de soupape et présentant au moins un premier et un second évidement (454, 455) pour le logement d'une bague d'étanchéité respective (500, 501) entre, d'une part, le coussinet (45) et d'autre part, le corps de soupape (20) et/ou la gaine de protection (10), les évidements (454, 455) s'étendant dans des plans, qui sont perpendiculaires l'un par rapport à l'autre, **caractérisée en ce que** le coussinet (45) présente au moins deux forages (452) pouvant être fermés et au moins un évidement (451) à la manière de cannelures ou de rainures pour la formation d'un canal, évidement qui détermine entre le coussinet (45) et le corps de soupape (20) et/ou la gaine de protection (10) au moins une chambre de distribution (453) comme pièce d'un dispositif d'évacuation des eaux (30, 30'), dans lequel débouchent d'une part, le forage (452) du coussinet (45) et d'autre part, au moins un forage d'évacuation des eaux (31), qui comprend un forage (22) à travers le corps de soupape (20) et/ou un forage (12) à travers la gaine de protection (10).

2. Bouche d'incendie selon la revendication 1, **caractérisée en ce que** des deux côtés de la chambre de distribution (453) est disposée respectivement au moins une des bagues d'étanchéité (500, 501) entre le coussinet (45) et la gaine de protection (10) et/ou le corps de soupape (20).

3. Bouche d'incendie selon l'une quelconque des revendications précédentes, **caractérisée en ce que** dans le corps de soupape (20) peut être disposé un corps de soupape de non-retour (44) sur la face du corps de soupape principale (43) opposée à la broche (41) et qui agit avec un second siège de soupape.

4. Bouche d'incendie selon la revendication 3, **caractérisée en ce que** le coussinet (45) comprend le second siège de soupape.

5. Bouche d'incendie selon la revendication 3 ou 4, **caractérisée en ce que** le corps de soupape de non-retour (44), qui comprend de préférence une bille logée de manière flottante, qui peut pénétrer au moins partiellement dans le corps de soupape principale (43), et/ou le corps de soupape principale (43), qui comprend de préférence à son extrémité tournée vers le corps de soupape de non-retour (44) un évidement essentiellement en forme de segment sphérique, à son extrémité opposée au corps de soupape de non-retour (44) au moins deux ailes (431) et, entre ces deux extrémités, au moins un évidement (430) tourné vers le coussinet (45), de préférence en forme de cannelures ou de rainures, est ou peuvent être guidés le long du coussinet (45).

6. Bouche d'incendie selon la revendication 5, **caractérisée en ce qu'**à l'état fermé de la soupape principale, comprenant le corps de soupape principale (43) en relation avec la broche (41) par l'intermédiaire de la garniture intérieure (42) s'étendant à travers la gaine de protection (10), a lieu une vidange du fluide de circulation, en particulier une évacuation de l'eau, hors de la gaine de protection (10), le long des ailes (431), par l'intermédiaire de l'évidement (430) du corps de soupape principale (43) ainsi qu'à travers les forages (452, 22, 12) du coussinet (45) et du corps de soupape (20) et/ou de la gaine de protection (10) dans au moins un canal d'évacuation (32) et/ou au moins un bourrage en pierre, alors qu'à l'état ouvert de ladite soupape principale, le forage (452) du coussinet (45) est fermé par une des ailes (431) du corps de soupape principale (43) pour empêcher une vidange, en particulier une évacuation.

7. Bouche d'incendie selon l'une des revendications précédentes, **caractérisée en ce que** le coussinet (45) comprend deux, trois ou quatre forages (452) et le corps de soupape principale (43) deux, trois ou quatre ailes (431).

8. Bouche d'incendie selon l'une quelconque des revendications précédentes, **caractérisée en ce que** le premier évidement (454) du coussinet (45) est disposé le long de sa bordure opposée au réseau de canalisations, de préférence dans la zone d'un prolongement à la manière d'un pied (456) pour loger une première des bagues d'étanchéité (500) entre le coussinet (45) et la gaine de protection (10) et/ou le corps de soupape (20).

9. Bouche d'incendie selon l'une quelconque des revendications précédentes, **caractérisée en ce que** le second évidement (455) du coussinet (45) est disposé le long de sa bordure tournée vers le réseau de canalisations pour loger une seconde des bagues d'étanchéité (501) entre le coussinet (45) et la gaine de protection (10) et/ou le corps de soupape (20), l'évidement (451) du coussinet (45) étant disposé de préférence entre le premier et le second évidements (454, 455).

10. Bouche d'incendie selon l'une quelconque des revendications précédentes, **caractérisée en ce que** le coussinet (45) pénètre dans un évidement (21) du corps de soupape (20), de préférence par l'intermédiaire d'au moins un prolongement à la manière d'un nez (457) le long de sa bordure tournée vers le réseau de canalisations.

11. Bouche d'incendie selon la revendication 10, **caractérisée en ce que** le prolongement à la manière d'un nez (457) s'étend sur le pourtour complet du coussinet (45), de préférence sur la surface située face au second évidement (455) du coussinet (45).

12. Bouche d'incendie selon l'une des revendications 3 à 11, **caractérisée en ce que** le coussinet (45), le corps de soupape principale (43) et/ou le corps de soupape de non-retour (44) est ou sont formés au moins partiellement de métal, en particulier d'acier inoxydable ou de laiton.

13. Bouche d'incendie selon la revendication 12, **caractérisée en ce que** le métal du coussinet, du corps de soupape principale et/ou du corps de soupape de non-retour est entouré, en particulier revêtu, de caoutchouc, de Néoprène, de Téflon ou d'une matière plastique, en particulier du polyéthylène.

14. Bouche d'incendie selon l'une quelconque des revendications précédentes, **caractérisée en ce que** sont prévus au moins deux forages d'évacuation des eaux (31).

15. Bouche d'incendie selon l'une quelconque des revendications précédentes, **caractérisée en ce que** le dispositif d'évacuation des eaux (30, 30') en relation d'action avec chaque forage d'évacuation des eaux (31) comprend au moins un canal d'évacuation (32) limité en particulier par deux parois de canal (33), un canal d'évacuation (32) s'étendant de préférence dans la zone de chaque forage d'évacuation (31).

16. Bouche d'incendie selon la revendication 15, **caractérisée en ce que** chaque paroi de canal (33) est reliée fixement au corps de soupape (20), formé de préférence de manière monobloc avec le corps de soupape (20).

17. Bouche d'incendie selon la revendication 15 ou 16, **caractérisée en ce que** chaque canal d'évacuation (32) peut être recouvert par un capot de protection (35) ou par une coque d'égouttage (36') au moins dans la zone de chaque forage d'évacuation (31), quatre forages d'évacuation (31), et quatre capots de protection (35) et/ou deux coques d'égouttage (36') étant de préférence prévus.

18. Bouche d'incendie selon la revendication 17, **caractérisée en ce que** chaque paroi de canal (33) comprend au moins une rainure de guidage (34) tournée de préférence vers le canal d'évacuation correspondant (32) et s'étendant le long dudit canal d'évacuation (32) pour la fixation amovible du capot de protection (35) ou de la coque d'égouttage (36').

19. Bouche d'incendie selon la revendication 18, **caractérisée en ce que** chaque capot de protection (35) et/ou chaque coque d'égouttage (36') est ou sont mis à disposition avec au moins deux rails (38') pour pénétration dans des rainures de guidage (34) des parois de canal (33), chaque coque d'égouttage (36') comprenant de préférence quatre rails (38').

20. Bouche d'incendie selon l'une des revendications 17 à 19, **caractérisée en ce que** chaque coque d'égouttage (36') est mise à disposition avec au moins une avancée (37'a) et/ou au moins un évidement (37' b) pour pénétration dans au moins un évidement (37'b) ou sur au moins une avancée (37'a) d'une autre coque d'égouttage (36').

21. Bouche d'incendie selon l'une des revendications 17 à 20, **caractérisée en ce que** chaque coque d'égouttage (36') est mise à disposition avec une pluralité de chambres tournées vers le corps de soupape pour loger des bourrages en pierre et/ou avec une pluralité d'ailettes (39') tournées vers le corps de soupape (20) en renforcement.

22. Bouche d'incendie selon l'une quelconque des revendications précédentes, **caractérisée en ce que** la gaine de protection (10), le corps de soupape (20) pouvant lui être relié directement ou indirectement par l'intermédiaire d'au moins une seconde canalisation et/ou la seconde canalisation est ou sont conçues en matière plastique, en particulier en polyéthylène.

23. Bouche d'incendie selon l'une quelconque des revendications précédentes, **caractérisée en ce que** le corps de soupape (20) comprend au moins une extrémité de bride, une extrémité de manchon à souder et/ou une extrémité pointue (23).

24. Bouche d'incendie selon l'une quelconque des revendications précédentes, **caractérisée en ce que** la gaine de protection (10) peut être fermée à son extrémité opposée au corps de soupape (20) avec un couvercle (11), le couvercle (11) comprenant de préférence une ouverture de prélèvements (50) ainsi qu'une ouverture pour la broche (41), pouvant être fixé par l'intermédiaire d'une liaison à bride, d'une liaison par soudure ou d'une liaison à vis, comprenant du métal, en particulier de l'acier inoxydable, de la fonte ou du laiton et/ou au moins sur sa face tournée vers l'espace intérieur de la gaine de protection, le couvercle (11) étant conçu de préférence entièrement dans une matière plastique, en particulier du polyéthylène.

25. Bouche incendie selon l'une quelconque des revendications précédentes, **caractérisée en ce que** la gaine de protection (10) peut être soudée au corps de soupape (20) ou à la seconde canalisation et/ou le corps de soupape (20) à la pièce de liaison (3) ou au moins à une première canalisation, en particulier avec interposition d'au moins un manchon à souder (2) comme un manchon à souder à filament chauffant.

26. Bouche d'incendie selon l'une des revendications 14 à 25, **caractérisée en ce qu'**est choisi comme polyéthylène du HDPE, en particulier du PE 100.
